(19) Europäisches Patentamt
European Patent Office
Office européen des brevets

(11) EP 4 356 734 A1

(12) # EUROPEAN PATENT APPLICATION

(43) Date of publication:
**24.04.2024 Bulletin 2024/17**

(21) Application number: **22382990.4**

(22) Date of filing: **17.10.2022**

(51) International Patent Classification (IPC):
***A01N 33/12*** *(2006.01)* ***A01P 1/00*** *(2006.01)*
***C11D 1/00*** *(2006.01)*

(52) Cooperative Patent Classification (CPC):
(C-Sets available)
**A01P 1/00; A01N 33/12; C11D 3/2089; C11D 3/30; C11D 3/48; C11D 7/265; C11D 7/3209** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Kao Corporation S.A.U**
**08210 Barberà del Vallès Barcelona (ES)**

(72) Inventors:
- **PEY GUTIÉRREZ, Carmen**
  **08210 Barberà del Vallès - Barcelona (ES)**
- **COLLADO HERVÁS, Mireia**
  **08210 Barberà del Vallès - Barcelona (ES)**
- **PI BOLEDA, Bernat**
  **08210 Barberà del Vallès - Barcelona (ES)**

(74) Representative: **ABG Intellectual Property Law, S.L.**
**Avenida de Burgos, 16D**
**Edificio Euromor**
**28036 Madrid (ES)**

(54) **CLEANING COMPOSITION**

(57) The present invention relates to an aqueous cleaning composition comprising one or more ether carboxylic acids or salts thereof and a cationic biocide compound. The present invention also relates to a process for the preparation of the composition, to a method of employing the composition and to the use of said composition in household and industrial applications.



Processed by Luminess, 75001 PARIS (FR)

(Cont. next page)

(52) Cooperative Patent Classification (CPC): (Cont.)

C-Sets
**A01N 33/12, A01N 25/30, A01N 37/14**

## Description

### FIELD OF THE INVENTION

The present invention relates to aqueous cleaning composition comprising one or more ether carboxylic acids or salts thereof and a cationic biocide compound. The present invention also relates to a process for the preparation of the composition, to a method of employing the composition and to the use of said composition in household and industrial applications.

### STATE OF ART

A number of substances are already known as surface cleaners. However, surface cleaners fail to effectively clean and disinfect surfaces simultaneously, especially well enough to meet the requirements of disinfection norms or standards. Few are actually capable of totally eliminating the source of all components on the surface that can cause infection. On the other hand, conventional solutions that are capable of disinfecting a surface, fail to effectively clean the surface as well, i.e., these solutions essentially lack any cleaning capability.

Only few compositions have a combined surface cleaning and surface disinfecting capability.

WO2018031067 discloses activated or inactivated compositions combining quaternary ammonium compounds and anionic surfactants or acids. In some embodiments, an antimicrobial quaternary ammonium compounds is provided in combination with an anionic surfactant yielding a composition having enhanced antimicrobial properties, which may include enhanced surfaces activity and/or sanitizing efficacy.

EP0652704 discloses the use of ether carboxylic acids as disinfectants in aqueous acid media together with other disinfectants and surfactants which causes rapid killing of bacteria in acidic cleaning agents.

WO2007125101 discloses a biocidal composition comprising hydrogen peroxide in a concentration of 0.05-50% (w/w) and ether carboxylic acid in field of disinfection and cleaning, more specifically to a low foaming enhanced biocidal activity compositions based on hydrogen peroxide.

However, there is still a need to find a stable cleaning composition that can effectively clean by totally removing soil deposition, such as accumulation of sediments by sedimentation (e.g. lime scale deposition), in treated surfaces and disinfect said surfaces, while exhibiting a good performance of the product.

### SUMMARY OF THE INVENTION

Thus, an object of the present invention is providing an effective aqueous cleaning composition, its method of application, its process of preparation and the use of said composition in household and industrial applications. This composition also exhibits disinfecting ability and good performance (i.e stability).

The present invention provide a composition comprising ether carboxylic acids and a cationic biocide, a process for the preparation of said composition, a method of application of said composition, and its use in household and industrial applications.

The composition according to the present invention provides more effective cleaning activity than expected from the cleaning activity of each of the components alone. In some aspects, the combination of one or more ether carboxylic acids (A) and a cationic biocide (B) according to the present invention surprisingly provide synergistic cleaning efficacy and are cost effective. It is further been discovered that the combination of both components also serves for efficiently disinfecting as well as providing an improved product performance in cleaning. Unexpectedly, the selection of ether carboxylic acids in combination of cationic biocides provides synergic cleaning efficacy of the composition when compared to each component alone, while exhibiting also a disinfecting ability of the cationic biocide.

Thus, the first object of the present invention is related to aqueous cleaning composition comprising:

- One or more ether carboxylic acids or salts thereof
- A cationic biocide. which is a quaternary ammonium compound

Process for the preparation of the composition according to the first object are also an object of the invention.

Another object of the present invention is the use of said composition in household applications and industrial applications.

A further object of the of the present invention is the method of employing the composition.

### DETAILED DESCRIPTION OF THE INVENTION

The term "synergistic", "synergy" or "synergic" when characterizing a mixture of components, such as component

(a) and component (b) of the compositions according to the present invention, is more effective in cleaning than the sum of cleaning effects obtained when using each of the components of the mixture, such as components (a) and (b), alone.

The term "cleaning" refers to a composition used to facilitate or aid in scale removal, lime soap removal, soil removal, bleaching and any combination thereof.

The term "disinfecting" refers to a composition used to reduce or eliminate the number of microorganisms present, such as bacteria, to reduce the risk of infection for the user.

The term "reduce" or "reduction" as used herein refers to obtain a value in a particular parameter after application or use of the composition of the invention which is lower than that before application or use of the composition of the invention.

The term "eliminate" or "elimination" as used herein refers to a total reduction or complete removal.

The term "removal" refers to partial and total elimination after application or use of the composition of the invention when compared to the same before application or use of the composition of the invention.

The first object of the present invention is an aqueous cleaning composition comprising:

(a) one or more alkyl ether carboxylic acids of Formula (I):

$$R1\text{-}OA\text{-}CH_2COOH \qquad (I)$$

or a salt thereof,

wherein

A represents a biradical consisting of n units $-(CH_2CH_2O)-$ and/or m units $-(CH_2\text{-}CH(R2)O)-$ or $-(CHR2CH_2O)-$;

R1 is a linear or branched alkyl chain having from 1 to 8 carbon atoms or linear or branched alkenyl chain having from 2 to 8 carbon atoms, preferably linear or branched alkyl or alkenyl chain having from 4 to 8 carbon atoms, more preferably linear or branched alkyl or alkenyl chain having from 6 to 8 carbon atoms;

R2 is a linear or branched alkyl chain having from 1 to 3 carbon atoms; and

n and m are independently an integer number from 0 to 15, and wherein the sum of m+n is from 1 to 15; preferably n and m are independently an integer number from 0 to 10, and wherein the sum of m + n is from 1 to 10; more preferably n and m are independently an integer number from 0 to 8, and wherein the sum of m +n is from 3 to 8;
and

(b) a cationic biocide, which is a quaternary ammonium compound,

wherein the composition has a pH value less than 4; preferably up to 3.5 more preferably up to 2.5; and wherein weight ratio between component (a) and component (b) is from 4:1 to 1:4, preferably from 2:1 to 1:2, more preferably from 1.5:1 to 1:1.5, even more preferably from 1.5:1 to 1:1.

The compositions of the present invention are particularly suitable for cleaning hard surfaces.

The term "aqueous" as used herein when characterizing the compositions of the inventions means that the compositions comprise water, preferably at least 50 wt.% water based on the total weight of the composition, more preferably at least 60 wt.%, more preferably at least 70 wt.%, more preferably at least 80 wt.%, even more preferably at least 85 wt.%, still more preferably at least 90 wt.%

The compositions have a pH value to less than 4; preferably to up to 3.5, more preferably a pH value to up to 2.5. The pH may be determined using a pH-meter.

**Ether Carboxylic acids or salts thereof (a):**

The aqueous cleaning composition of the present invention comprises one or more ether carboxylic acid represented by formula (I)

$$R1\text{-}O\text{-}A\text{-}CH_2COOH \qquad (I)$$

or a salt thereof,

wherein

A represents a biradical consisting of n units $-(CH_2CH_2O)-$ and/or m units $(CH_2-CH(R2)O)$ or $-(CHR2CH_2O)-$;

R1 is a linear or branched alkyl chain having from 1 to 8 carbon atoms or linear or branched alkenyl chain having from 2 to 8 carbon atoms, preferably linear or branched alkyl or alkenyl chain having from 4 to 8 carbon atoms, more preferably linear or branched alkyl or alkenyl chain having from 6 to 8 carbon atoms;

R2 is a linear or branched alkyl chain having from 1 to 3 carbon atoms; and

n and m are independently an integer number from 0 to 15, and wherein the sum of m+n is from 1 to 15; preferably n and m are independently an integer number from 0 to 10, and wherein the sum of m + n is from 1 to 10; more preferably n and m are independently an integer number from 0 to 8, and wherein the sum of m +n is from 3 to 8.

In a particular embodiment, the ether carboxylic acid is a compound of formula (Ia):

$$R1-O-(CH_2CH_2O)n-CH_2COOH \qquad (Ia)$$

or a salt thereof,

wherein R1 is a linear or branched alkyl chain having from 1 to 8 carbon atoms, preferably from 4 to 8 carbon atoms, more preferably from 6 to 8 carbon atoms;

n is an integer for 1 to 15, preferably from 1 to 10, more preferably from 4 to 8, still more preferably 8.

Preferably, the ether carboxylic acid is selected from the group consisting of an ether carboxylic acid of formula (Ia) wherein R1 is a linear alkyl chain having 6 carbon atoms and n is 3; an ether carboxylic acid of formula (Ia) wherein R1 is a linear alkyl chain having 8 carbon atoms and n is a 8; and combinations thereof.

In one embodiment of the present invention, R1 is a linear or branched alkyl chain containing 1 to 8 carbon atoms or a linear alkenyl group containing 2 to 8 carbon atoms and from 1 to 3 double bonds; preferably R1 is an alkyl or alkenyl chain containing 4 to 8 carbon atoms, more preferably 6 to 8 carbon atoms. Preferably, R1 is a linear or branched alkyl chain having from 1 to 8 carbon atoms, preferably from 4 to 8 carbon atoms, more preferably from 6 to 8 carbon atoms. Examples of R1 are ethyl, n- butyl, n-propyl, n-heptyl, n-hexyl, n-octyl, 2-octyl, 2-ethylbutyl, 2-methylpentyl, 2-ethylhexyl or mixtures thereof.

In another embodiment of the present invention, R1 is derived from C1-C8 alcohols, preferably C4-C8 alcohols, more preferably from C6-C8 alcohols, which are preferably derived from natural fats and oils as well as those having a synthetic origin. Examples of alcohols include but are not limited to ethanol, n-butanol, n-propanol, n-heptanol, n-hexanol, n-octanol, 2-octanol (caprylic alcohol), 2-ethylbutanol, 2-methylpentanol, 2-ethylhexanol, isopropanol, or mixtures thereof.

As used herein, the term "alkyl" refers to a straight or branched hydrocarbon chain radical consisting of carbon and hydrogen atoms, containing no unsaturation, having the indicated number of carbon atoms, and which is attached to the rest of the molecule by a single bond.

As used herein, the term "alkenyl" refers to a linear hydrocarbon chain radical consisting of the indicated number of carbon atoms and containing ate least one double bond, preferably 1, 2, or 3 double bonds, having the indicated number of carbon atoms (which is at least two), and which is attached to the rest of the molecule by a single bond.

As used herein, the term "salt" refers to the carboxylate anion of the compound of formula (I) as defined herein (i.e. $R1-O-A-CH_2COO-$) and a suitable cation selected from the groups of an alkali metal (such as $Na^+$ and $K^+$), an alkaline earth metal (such as $Ca^{2+}$ and $Mg^{2+}$), ammonium, an alkylammonium, and alkanol ammonium or a glucammonium.

In a particular preferred embodiment, R1 is a linear or branched alkyl containing 6 to 8 carbon atoms or a linear alkenyl group containing 6 to 8 carbon atoms and from 1 to 3 double bonds. Examples of R1 include n-hexyl, n-heptyl, n-octyl, 2-octyl or mixtures thereof.

In a particular preferred embodiment, R1 is derived from C6-C8 fatty alcohols, which are preferably derived from natural fats and oils. Examples of fatty alcohols include n-hexanol, n-heptanol, n-octanol, 2-octanol (caprylic alcohol)

or mixtures thereof.

In a preferred embodiment, R2 is a methyl group.

In the present invention, the ether carboxylic acids are ethoxylated and/or propoxylated, the value of n+m in formula (I) therefore being greater than 0. When the ether carboxylic acid of formula (I) is ethoxylated, n is greater than 0. When the ether carboxylic acid of formula (I) is propoxylated, m is greater than 0 and R2 is methyl. The order of sequence of the ethylene oxide units $-(CH_2CH_2O)-$ and/or units $(CH_2-CH(R2)O)$ or $-(CHR2CH_2O)-$ (such as propylene oxide groups), in biradical A is not critical for the invention. Therefore, ether carboxylic acid according to formula (I) containing ethylene oxide units $-(CH_2CH_2O)-$ (such us ethylene oxide groups) and/or units $(CH_2-CH(R2)O)$ or -(CHR2CH2O)-(such as propylene oxide groups), in separate blocks, and ether carboxylic acids or salts thereof according to formula (I) where ethylene oxide units $-(CH_2CH_2O)-$ and/or units $(CH_2-CHR2-O)$ or - $(CHR2CH_2O)$ (such as propylene oxide) are randomly distributed, can be used in the efficient cleaning compositions according to the invention.

In one embodiment of the present invention, n and m are independently an integer number from 0 to 15, preferably n and m are independently an integer number from 0 to 10. In one embodiment, m represents a number within the range of 1 to 15, preferably within the range of 1 to 10, more preferably within the range of 4 to 8. In another embodiment, n represents a number within the range of 1 to 15, preferably within the range of 1 to 10, more preferably within the range of 3 to 8.

In an embodiment of the present invention, n+m represents a number within the range of 0 to 15, preferably within the range of 0 to 10, more preferably within the range of 3 to 8.

Preferably, n is an integer from 3 to 8, even more preferably is 8.

Preferably, m is 0, i.e. the ether carboxylic acid is a compound of formula (Ia).

In a particular preferred embodiment, in the ether carboxylic acid represented by formula (I) m=0, n represents a number within a range of 3 to 8, and the sum of n+m represents a number within the range of 3 to 8.

The skilled in the art knows how to obtain an ether carboxylic acid of Formula (I) according to the invention Said ether carboxylic acid are usually obtained by a process comprising the alkoxylation of an alcohol and subsequent carboxymethylation, as described by Meijer and Smid in Polyether Carboxylates; Anionic Surfactants; Surfactant Sciencie Series, Vol. 56 (p. 313-361), edited by Helmut W. Stache, ISBN: 0-8247-9394-3.

Examples of commercially available ether carboxylates of Formula (I) are AKYPO® LF 1 ( INCI name Capryleth-6 carboxylic acid, i.e. a caprylic ether carboxylic acid with an average ethoxylation degree of 5, AKYPO® LF 2 ( INCI name Capryleth-9 carboxylic acid, i.e. a caprylic ether carboxylic acid with an average ethoxylation degree of 8, AKYPO® LF 4 ( INCI name Mixture of Capryleth-9 carboxylic acid and Hexeth-4 carboxylic acid, i.e. a mixture of caprylic and caproic ether carboxylic acids with an average ethoxylation degree of 8 and 3 respectively), and AKYPO® LF 6 ( INCI Name Mixture of Capryleth-9 carboxylic acid and Butheh-2 carboxylic acid, i.e. a mixture of caprylic and butyric ether carboxylic acids with an average ethoxylation degree of 8 and 2 respectively), all marketed by Kao Chemicals Europe.

Among them, AKYPO® LF 2 (INCI name Capryleth-9 carboxylic acid) and AKYPO® LF 4 (INCI name Mixture of Capryleth-9 carboxylic acid and Hexeth-4 carboxylic acid) are preferred.

In one embodiment of the present invention, ether carboxylic acid of formula (I), i.e. component (a), is present in amount from 1 to 5 wt.% based on the total weight of the composition, more preferably from 1 to 2 wt.% based on the total weight of the composition, even more preferably 1 wt.% based on the total weight of the composition.

Each of the indicated amounts being expressed as percentage by weight of the mentioned component with respect to the total weight of the composition.

**Cationic biocide (B):**

The term "cationic biocide" refers to cationic surfactants that destroy, deter, render harmless, or exert a controlling effect on any harmful organism (i. e bacteria).

According to the present invention, cationic biocide (B) is a quaternary ammonium compound.

The term "quaternary ammonium compound" refers to a salt of a quaternary ammonium cation, which refer to a protonated nitrogen atom ($N^+$) covalently bonded to four radicals, such as alkyl and/or aryl groups.

Preferably, the cationic biocide (B) is a quaternary ammonium compound of general formula (II):

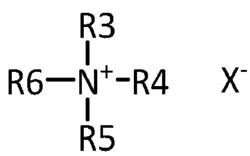

(II)

wherein

R3, R4, R5 and R6 are the same or different, each independently being selected from the group consisting of a $C_1$-$C_{20}$ straight or branched alkyl chain, $C_3$-$C_{20}$ cycloalkyl optionally substituted with a straight or branched alkyl having from 1 to 6 carbon atoms, $C_6$-$C_{20}$ aryl optionally substituted with a straight or branched alkyl having from 1 to 6 carbon atoms, and benzyl; and

X- is an anionic counterion.

The term "anionic counterion" includes any ion that can form a salt with quaternary ammonium. The anionic counterion cannot be the anion of the ether carboxylic acid of formula (I) described above. Examples of suitable counterions include halides (such as chlorides and bromides), propionates, methosulphates, saccharinates, ethosulphates, hydroxides, acetates, phosphates, carbonates, and nitrates. Preferably, the anionic counterion is chloride.
The term "alkyl" has been previously defined. Examples of $C_1$- $C_{20}$ straight or branched alkyl chain include, but are not limited to: methyl, ethyl, n-propyl, isopropyl, n-butyl, sec-butyl, isobutyl, tert-butyl, n-pentyl, isopentyl, tert-pentyl, neopentyl, n-hexyl, n-heptyl, n-octyl, n-decyl, n-dodecyl, n-hexadecyl and n-octadecyl.
The term "cycloalkyl" as used herein refers to cyclic alkyl groups having the indicated number of ring carbon atoms. Examples, of substituted or unsubstituted $C_3$-$C_{20}$ cycloalkyl groups include, but are not limited to: cyclopropyl, cyclopentyl, cyclohexyl, 4-methylcyclohexyl, 4-ethylcyclohexyl, 4-n-propylcyclohexyl and 4-n-butylcyclohexyl.
The term "aryl" as used herein refers to an aromatic hydrocarbon radical having the indicated number of ring carbon atoms such as phenyl, naphthyl or anthracyl. The aryl group may be unsubstituted or substituted with a straight or branched alkyl group having from 1 to 6 carbon atoms, preferably from 1 to 3 carbon atoms, such as methyl or ethyl. Examples $C_6$-$C_{20}$ of substituted or unsubstituted aryl groups include, but are not limited to: phenyl, naphthyl, 4-methylphenyl and 4-ethylphenyl.
In one embodiment of the present invention, in the quaternary ammonium compounds of formula (II), R3, R4, R5 and R6 are the same or different, each independently being selected from the group consisting of $C_1$-$C_{20}$ straight or branched alkyl chain, and benzyl. Preferably, at least two of R3, R4, R5 and R6 are methyl, and the other two of R3, R4, R5 and R6 are selected from the group consisting of $C_1$-$C_{20}$ straight or branched alkyl chain, and benzyl.
In one embodiment of the present invention, quaternary ammonium compounds of formula (II) are selected from the group consisting of ($C_8$-$C_{18}$) alkyl dimethylbenzylammonium salt, a di-($C_1$-$C_{10}$) alkyl dimethylammonium salt, and a combination thereof.
In a particular preferred embodiment of the present invention, quaternary ammonium compounds of formula (II) are selected from di-($C_1$-$C_{10}$)alkyl dimethylammonium salts.
Examples of quaternary ammonium compounds of formula (II) include but are not limited to, dimethyl ethyl benzyl ammonium chloride, octyl decyl dimethyl ammonium chloride, dioctyl dimethyl ammonium chloride, didecyl dimethyl ammonium chloride to name few.
Among them, ($C_8$-$C_{18}$) alkyl dimethyl benzyl ammonium chloride and didecyl dimethyl ammonium chloride are preferred; didecyl dimethyl ammonium chloride is particularly preferred.
In one embodiment of the present invention, the cationic biocide of formula (II), i.e. component (b), is present in amount from 0.5 to 5 wt.% based on the total weight of the composition, more preferably from 0.8 to 1 wt.% based on the total weight of the composition, even more preferably 1 wt.% based on the total weight of the composition.
In one embodiment of the present invention, weight ratio between the ether carboxylic acid, i.e component (a), and the cationic biocide, i.e. component (b), is 4:1 to 1:4, preferably 2:1 to 1:2; more preferably from 1.5:1 to 1:1.5, even more preferably from 1.5:1 to 1:1.
Surprisingly, the inventors found that components (a) and (b) exhibit a molar weight ratio dependency to achieve synergistic cleaning effect.
In a particular embodiment according to the present invention weight ratio between ether carboxylic acid (a) and cationic biocide (b) is selected from 1.5:1 to 1:1.

**Additional functional ingredients (c)**

In another embodiment of the present invention, the described aqueous cleaning compositions can be further combined with additional functional ingredients (c).
By "additional functional ingredients" it should be understood any additional ingredient which is dissolved in the described aqueous cleaning compositions and which contributes to improve synergistic cleaning efficacy or disinfecting ability of the ether carboxylic acid (a) and cationic biocide (b), as well as improving product performance.
In one embodiment of the present invention, the composition includes additional functional ingredients (which are neither an ether carboxylic acid of formula (I) or a cationic biocide of formula (II)) selected from the group consisting of surfactants, thickeners and/or viscosity modifiers, solvents, builders, pH adjusting agents, perfumes, colouring agents, preservatives, and combinations thereof.

Surfactants

The composition according to the present invention could further include surfactants which are other than the cationic biocide of formula (II) and which further improve synergistic cleaning effect of components (a) and (b) while disinfecting. Good performance is also achieved.
Examples of said further surfactants include, but are not limited to, non-ionic surfactants, like fatty ethoxylated alcohols, amine N-Oxides or alkyl polyglycolides among others.
In one embodiment of the present invention, said surfactant is present in amount from 0 to 0.5 wt.% based on the total weight of the composition.
Each of the indicated amounts being expressed as percentage by weight of the mentioned component with respect to the total weight of the composition.

Thickener and/or Viscosity modifiers

The composition according to the invention can comprise certain amounts of thickeners and /or viscosity modifiers to improve product performance. Examples of suitable thickeners and/or viscosity modifiers include, but are not limited to, polyacrylates, cellulose derivatives (e.g hydroxyethylcellulose, carboxymethylcellulose), polyacrylamides, polysilicic acids and xanthan gums.
In one embodiment of the present invention, thickeners are present in an amount of from 0 to 2 wt.% based on the total weight of the composition.
Each of the indicated amounts being expressed as percentage by weight of the mentioned component with respect to the total weight of the composition.

Solvents

The compositions of the invention are aqueous, i.e. they comprise water. A variety of additional solvents can be used as the diluting solvent. The compositions of invention might contain certain amounts of water soluble solvents.
In one embodiment of the present invention suitable water soluble solvents include, but are not limited to, organic solvents such as alcohols. Examples of suitable alcohols include short chain alcanols, aromatic alcohols, glycol ethers, glycols and alcohol amines. Suitable short chain alcohols include isopropanol, ethanol, 1-propanol, 2-propanol, propyleneglycol, methoxypropanol, butoxypropanol; polyethyleneglycol or mixtures thereof.
In a particular preferred embodiment of the present invention, solvents (other than the water that is already present in the compositions of the invention) are selected from isopropanol, propyleneglycol and mixtures thereof.
In one embodiment of the present invention, solvent (other than water) is present in amount from 0.5 to 5 wt.% based on the total weight of the composition; preferably 0.5 to 1.5 wt.% based on the total weight of the composition.
Each of the indicated amounts being expressed as percentage by weight of the mentioned component with respect to the total weight of the composition.

Builders

The composition according to the present invention can comprise a certain amounts of builders in order to improve the cleaning properties of the composition. In addition, due to its ability to form coordination complexes with metal cations, builders improve the stability of the composition
Examples of builders suitable for the composition according to the composition include, ethylenediaminetetraacetic acid (EDTA), diethylenetriaminepentaacetic acid (DTPA), N-(hydroxyethyl)-ethylenediaminetriacetic acid (HEDTA), nitrilotriacetic acid (NTA), 2-hydroxyethyliminodiacetic acid (HEIDA), 1,1-diphosphoric acid (HEDP), N,N-dicarboxymethyl glutamic acid tetrasodium salt (GLDA), hydroxydes, carbonates, bicarbonates, silicates, borates, phosphates, citrates and lactates.
In a preferred embodiment of the present invention, suitable builders are selected from citrates and lactates. Suitable examples of citrates and lactates include sodium citrate, sodium lactate and mixtures thereof.
In another preferred embodiment of the present invention, the builder is sodium citrate.
In one embodiment of the present invention, the builders are present in amount from 0.5 to 5 wt.% based on the total weight of the composition; preferably from 0.5 to 1.5 wt.% based on the total weight of components.
Each of the indicated amounts being expressed as percentage by weight of the mentioned component with respect to the total weight of the composition.

pH adjusting agents

The composition according to the present invention can include certain amounts pH adjusting agents in order to provide the composition of the invention with a pH of choice, required to achieve synergistic cleaning effect between component A and component B as well as effective disinfection ability, i.e. an acid pH, less than about 4; preferably up to 3.5, more preferably up to 2.5.

In one embodiment of the present invention, pH adjusting agents includes weak acids. Suitable weak acids could be selected from inorganic and/or organic acids. Suitable examples of weak acids include but are not limited to sulfurous acid, phosphoric acid, nitrous acid, fluoric acid, methanoic acid, amidosulfonic acid, formic acid, lactic acid, citric acid, acetic acid, oxalic acid, malic acid, maleic acid, ascorbic acid, succinic acid and mixtures thereof.

In one embodiment of the present invention, weak acids are selected from organic acids. Suitable examples of weak organic acids containing carboxylic groups like formic acid, lactic acid, citric acid, acetic acid, oxalic acid, malic acid, maleic acid, ascorbic acid and mixtures thereof.

In a preferred embodiment of the present invention, the weak acid is selected from citric, lactic acid, and salts thereof.

In one embodiment of the present invention, pH adjusting agents are present in amount from 1 to 10 wt.% based on the total weight of the composition, preferably in amount from 2 to 7 wt.% based on the total weight of the composition; more preferably in amount from 2 to 4 wt.% based on the total weight of the composition.

In a preferred embodiment of the present invention, the pH adjusting agent is present in amount of 3.5 wt% based on the total weight of the composition.

Each of the indicated amounts being expressed as percentage by weight of the mentioned component with respect to the total weight of the composition.

Perfumes and/or colorants

The composition according to the invention might contain certain amounts of perfumes or colorants intended to improve its appearance or intended to enable the visual detection of the presence of the composition according to the invention.

Suitable examples of perfumes might include but are not limited to octaldehyde, orange oil, lemon oil, citronellol, geraniol, geranonitrile, terpineol, benzyl acetate, eucalyptus oil, citral and pine essential oil.

Suitable examples of colorants might include but are not limited to iron oxide, azo pigments, diaxozine pigments and carbazole pigments.

In one embodiment of the present invention, perfume is present in amount from 0 to 3 wt.% based on the total weight of the composition, preferably from 0 to 0.5 wt.% based on the total weight of the composition.

In one embodiment of the present invention, colorant is present in amount from 0 to 0.5 wt.% based on the total weight of the composition.

Each of the indicated amounts being expressed as percentage by weight of the mentioned component with respect to the total weight of the composition.

Preservatives

The composition according to the invention might contain certain amounts of preservatives to improve its stability or intended to prevent undesirable chemical changes in the composition. Suitable examples of preservatives might include but are not limited to benzyl alcohol, benzisothiazolinone, methylchloroisothiazolinone, potassium sorbate and mixtures thereof.

In one embodiment of the present invention, perfume is present in amount from 0 to 2 wt.% based on the total weight of the composition.

Each of the indicated amounts being expressed as percentage by weight of the mentioned component with respect to the total weight of the composition.

In a particular embodiment, the compositions of the invention are devoid of hydrogen peroxide.

**Composition of the invention:**

The main object of the present invention has been described above and is an aqueous cleaning composition comprising:

a) one or more ether carboxylic acids of formula (I) as defined above, and
b) at least a cationic biocide which is a quaternary ammonium compound as defined above.

According to the present invention, the composition have a pH value less than 4; preferably up to 3.5 more preferably up to 2.5.

It was surprisingly found that the combination of ether carboxylic acids of formula (I) in combination with a cationic biocide of formula (II) at certain ratios and pH values, provides a composition having a synergistic cleaning effect, while exhibiting also a disinfecting effect and good performance.

In the present invention, the compositions have a pH value less than 4.

In another embodiment, the compositions of the invention have a pH value between 1 and 3.8, between 1 and 3.5, between 1 and 3.

In another embodiment, the compositions of the invention have a pH value between 3 and 3.8, between 3 and 3.5.

In another embodiment of the present invention, the compositions of the invention have a pH value between 2 and 3.8, preferably between 2 and 3.5, more preferably between 2 and 3.

In another embodiment of the present invention, the composition of the invention have a pH value between 1 and 2.8, preferably between 1 and 2.5, more preferably between 1 and 2, more preferably between 1.5 and 2.5, more preferably between 1.5 and 2, more preferably between 2 and 2.5, more preferably 2.5.

In a particular preferred embodiment according to present invention, the compositions have a pH value of up to 2.5.

In one embodiment according to the present invention, the weigh ratio between component (a) and component (b) is from 4:1 to 1:4, or any combination thereof.

In a preferred embodiment according to the present invention the weigh ratio between component (a) and component (b) is from 2:1 to 1:2; more preferably 1.5:1 to 1:1.5; even more preferably from 1.5:1 to 1:1.

Such compositions are also very ecologically friendly. In one embodiment of the invention, the composition of the invention is supplemented with additional functional ingredients (c) enhancing its effective cleaning and disinfecting effect.

In a particular embodiment, the aqueous cleaning composition comprises one or more ethercarboxylic acids of formula (I), i.e. component (a), and at least a cationic biocide, i.e. component (b) .

In another particular embodiment, the aqueous cleaning composition of the invention comprises one or more ether carboxylic acids of formula (I), i.e. component (a), a cationic biocide, i.e. component (b), and additional functional ingredient, i.e. component (c).

**Process for obtention**

According to the present invention, a detailed process to obtain the cleaning compositions of the invention, includes the following steps:

A) mixing the components (a), (b) and, if present, component (c), with water at temperature suitable for homogenization thereof;

B) stirring to obtain homogeneous and clear solution; and

C) if necessary, adjust the pH value to less than 4, preferably to up to 3.5, more preferably to up to 2.5.

It is important to ensure aqueous acidic conditions in order to enhance synergistic cleaning effect between component (a) and (b) and additionally their disinfecting effect.

In a particular preferred embodiment of the invention aqueous cleaning composition is in acidic media with pH value up to 2.5.

**Use of composition according to the invention**

The composition according to the present invention can be used as a hard surface cleaner with disinfecting ability in household and/or industrial applications, e.g to remove lime deposits or lime soap deposits on a hard surface. Suitable examples of use areas include but are not limited to use as bathrooms, kitchens, factories, hospitals, dental office and food plants. One additional advantage of the compositions of the inventions is that they can be applied in several hard surfaces, including smooth surfaces or those having an irregular or porous topography.

Suitable examples of hard surfaces include but are not limited to, architectural surfaces (e.g., floors, walls, windows, sinks, tables, counters and signs); eating utensils; hard-surface medical or surgical instruments and devices; and hard-surface packaging. Such hard surfaces can be made from a variety of materials including, for example, ceramic, metal, glass, wood or hard plastic.

In one embodiment of the present invention, the composition of the invention can be used for treating or preventing scaling, including mineral scale control on hard surfaces.

In one embodiment of the present invention, the composition of the invention can be used to reduce the

formation, precipitation and/or deposition of hard water scale, such as calcium carbonate, on the applied hard surface.

In further embodiment of the present invention, the method of the invention can be used for the prevention of the formation, precipitation and /or deposition of hard water scale on articles such as glasses, plates, and silverware.

In another embodiment of the present invention, the composition of the invention can be used for removing and/or preventing de redeposition of soils in various applications such as household and/or industrial applications.

In an embodiment of the present invention, the composition can be used as a foaming or non-foaming environmental cleaner and/or disinfectant.

In another embodiment of the present invention, the composition according to the present invention can be included in products such as cleaners, disinfectants or 2-in-1 products, cleaner/disinfectant products.

The use of composition according to the present invention in industrial applications and household applications can be explained due to its effective cleaning and disinfectant ability on the surfaces it is applied to, product stability and scale removal. The term "effective cleaning and disinfectant ability on applied surfaces" refers to the composition's ability to clean and disinfect at the same time by a single application to the surface to be treated.

In a preferred embodiment of the present invention, household applications include bathroom disinfectant cleaners and/or kitchen disinfectant cleaners.

In another preferred embodiment according to the present invention, composition could be used in industrial applications as acid industrial disinfectant cleaners for cleaning and disinfecting of equipment and tanks.

**Method employing effective cleaning composition of the invention**

In one embodiment of the invention, the composition according to the invention is used in various cleaning applications of hard surfaces by a method comprising the following steps:

A) contacting said hard surface with an effective amount of the cleaning composition according to the present invention;

B) allowing said composition to remain in contact with said hard surface at room temperature for a sufficient period of time (i.e 1-60 min) so that the composition cleans and optionally disinfects the hard surface; and

C) rinsing said hard surface with water.

By "room temperature" it should be understood as a temperature from 0 to 45°C, preferably from 10 to 35 °C, more preferably, from 15 to 30 °C, more preferably from 20 to 25 °C, where experiments are performed.

By "sufficient period of time" it should be understood the period of time necessary for the product to be in contact with the hard surface until visual cleaning effect is observed, such as from 1 to 60 min.

The above method results in the hard surface being cleaned and/or disinfected and/or having a decreased amount of scale deposit thereon.

Step A) of contacting the cleaning composition of the invention with the hard surface can include any of numerous methods of application of a composition of the invention, such as pouring the composition on the hard surface to be treated, spraying the composition on the hard surface to be treated, applying the composition to a fabric and contacting said fabric with the hard surface to be treated. The composition may be in liquid or as a foam or gel.

The cleaning composition could be applied in hard surfaces with irregular or porous topography. Suitable examples of hard surfaces include but are not limited to, architectural surfaces (e.g., floors, walls, windows, sinks, tables, counters and signs); eating utensils; hard-surface medical or surgical instruments and devices; and hard-surface packaging. Such hard surfaces can be made from a variety of materials including, for example, ceramic, metal, glass, wood or hard plastic.

The present compounds can be employed as a foaming or non-foaming environmental sanitizer or disinfectant.

In one embodiment of the present invention, the method can be used for treating or preventing scaling, including mineral scale control on hard surfaces.

In one embodiment of the present invention, the method of the invention can be used to reduce the formation, precipitation and/or deposition of hard water scale, such as calcium carbonate, on the hard surfaces treated with the cleaning composition.

In further embodiment of the present invention, the method of the invention can be used for the prevention of the formation, precipitation and/or deposition of hard water scale on articles such as glasses, plates, and silverware.

In another embodiment of the present invention, the method of the invention can be used for removing and/or preventing de redeposition of soils in various applications such as household and/or industrial applications.

In one embodiment of the present invention, cleaning efficacy is measured according to the standard methodology IKW Determination of the cleaner's ability to remove lime soaps, SOFW Journal, 129.

In another embodiment according to the present invention, the disinfecting efficacy is measured according to the following methods:

- Bactericidal activity in Suspension against Pseudomonas Aeruginosa at 2% dilution (EN 1276:2020) at 3.00% dilution.
- Bactericidal activity on a Hard Surface against Pseudomonas Aeruginosa (EN 13697:2015) at 1.00% dilution.

The following examples are given in order to provide a person skilled in the art with a sufficiently clear and complete explanation of the present invention, but should not be considered as limiting of the essential aspects of its subject, as set out in the preceding portions of the description.

## EXAMPLES

The first part of the Examples section corresponds to the preparation of hard surface effective cleaners compositions of the present invention.
The second part of the Examples section corresponds to the performance evaluation of hard surface effective cleaners compositions of the present invention.
The third part of the Examples section refers to the disinfecting efficacy of the compositions according to the invention.

### 1. Preparation of Effective hard surface cleaning composition

The preparation of the compositions is carried out at room temperature as follows: Suitable amounts of ether carboxylic acid of formula (I) and deionized water are charged into a beaker, stirring until complete dissolution. Then, the solvent and the builder are added into the composition and mixed until complete dissolution. The process is followed by the incorporation of the cationic biocide of formula (II) into the formulation, stirring the mixture until complete homogenization. Finally, the acid is added to have the suitable acidic pH adjusted, under continuous agitation to obtain a completely clear and homogeneous solution.
Table 1. The results in table show detail of the components of the hard surface effective cleaning composition according to the invention (Examples 1 to 3) and comparative examples (C1-C4).

Table 1. The results in table show detail of hard surface effective cleaning composition according to the invention (Examples 1 to 3) and comparative examples(C1-C4).

| Ingredients | Components | Example 1 | Example 2 | Example 3 | Comparative 1 | Comparative 2 | Comparative 3 | Comparative 4 |
|---|---|---|---|---|---|---|---|---|
| Component (a): Ether carboxylic acid | A1 | 1.2 | 1.0 | - | 1.0 | - | - | - |
| | A2 | - | - | 1.0 | - | - | - | 1.0 |
| | A3 | - | - | - | - | - | 1.0 | - |
| Component (b): Cationic biocide | Quaternary ammonium compund (DDAC) | 0.8 | 1.0 | 1.0 | - | 1.0 | 1.0 | 1.0 |
| weight Ratio (a) : (b) | (A: B) | 1.5:1 | 1:1 | 1:1 | 1:0 | 0:1 | 1:1 | 1:1 |
| Builder | Sodium Citrate | 0.5 | 0.5 | 0.5 | 0.5 | 0.5 | 0.5 | 0.5 |
| pH adjusting component | Citric acid | Approx. 3.5 | Approx. 3.5 | Approx. 3.5 | Approx. 3.5 | Approx. 3.5 | Approx. 3.5 | Approx. 0.5 |
| Solvent | Propylene glycol | 1 | 1 | 1 | 1 | 1 | 1 | 1 |
| | Water | Up to 100% | Up to 100% | Up to 100% | Up to 100% | Up to 100% | Up to 100% | Up to 100% |
| pH | Aqueous solution pH value | 2.5 | 2.5 | 2.5 | 2.5 | 2.5 | 2.5 | 4.0 |

A1: C6/C8 ether carboxylic (Average ethoxylation: 8/3 EO mols); AKYPO® LF-4 at 89% active matter supplied by Kao Chemicals Europe.
A2: C8 ether carboxylic (Average ethoxylation: 8 EO mols); AKYPO® LF-2 at 89% active matter supplied by Kao Chemicals Europe.
A3: C12/C14 ether carboxylic (Average ethoxylation: 4.5 EO mols); AKYPO® RLM 45 CA at 92% active matter supplied by Kao Chemicals Europe.
DDAC:Didecyldimethylammonium chloride
Concentrations of each ingredient are also given (percentage by weight, which represent 100% of active material for each component).

**2. Appearance and Performance evaluation/ cleaning efficiency of hard surface effective cleaners compositions of the present invention.**

The appearance is visually evaluated at room temperature, designating the appearance in which the formula is transparent and homogeneous as "correct", and as "incorrect" if the composition shows cloudiness or phase separation.

The lime soap cleaning efficacy is determined according to a standard methodology, *IKW Determination of the cleaner's ability to remove lime soaps* from the SOFW Journal, 129. This test is carried out by using ceramic tiles that are previously soiled with a calcium stearate suspension.

Compositions are tested at specific contact times with the surface, and after the exposure time, the solution is mechanically removed by using a sponge. A visual quantification of the cleaning is performed following a standard scale defined by the standard methodology, expressed as an average percentage of lime soap cleaning (% Lime Soap Cleaning).

The limescale cleaning efficacy, also known as descaling power or limescale solubility, is also determined according to IKW in The German Cosmetics, Toiletries, Perfumes and Detergents Association, Recommendations for the quality assessment of acidic toilet cleaners. SOFW-Journal. 2000, 126, 50-56.

This test consist of immersing a white Carrara marble slab, of 75×150×5mm dimensions, in a 250mL of the tested cleaning composition during 10 seconds. After the immersion time, the slab is subsequently removed from the cleaning bath and placed in vertical position for 10 minutes. Then, the marble slab is rinsed under running water and dried during 1 hour at 105°C.

Thereafter the drying step, the slabs are cooled down to room temperature. After this process, the amount of calcium carbonate dissolved is gravimetrically determined, by measuring the slab weight difference after ($m(slab)_f$) and before ($m(slab)_0$) the immersion in the cleaner, as the follow expression indicates:

$$CaCO_3\ dissolved = m(slab)_0 - m(slab)_f$$

The limescale solubility of the cleaning compositions is always related to a standard toilet cleaner as recommended by IKW in The German Cosmetics methodology, IKW Determination of the cleaner's ability to remove lime soaps from the SOFW Journal, 129.

The limescale cleaning efficacy is expressed as a Limescale Dissolution Index, a measure for the solubilizing power of the cleaner with regard to lime, according to IKW in The German Cosmetics, Toiletries, Perfumes and Detergents Association. SOFW-Journal. 2000, 126, 50-56. This value is calculated from the following mathematical expression, where the Lime dissolution index should be at least 0.7 to conclude that the acid cleaner has enough descaling power.

$$Lime\ dissolution\ index = \frac{CaCO_3\ dissolved\ by\ test\ product\ (mg)}{CaCO_3\ dissolved\ by\ the\ standard\ cleaner\ (mg)}$$

The limescale solubility of the cleaning compositions is always related to a acidic toilet cleaner as recommended by IKW in The German Cosmetics, Toiletries, Perfumes and Detergents Association, Recommendations for the quality assessment of acidic toilet cleaners. SOFW-Journal. 2000, 126, 50-56.

Table 2, 3 and 4 - Details Appearance, % Lime Soap Cleaning and Limescale Dissolution Index of the compositions according to the invention.

The values shown in Table 2 show a synergistic cleaning effect of the compositions according to the invention (Examples 1 and 2) with proper formula appearance, enough limescale dissolution index and surprisingly a higher lime soap cleaning efficacy as compared to C1 and C2.

The values shown in Table 3 Show that alkyl chain an ethoxylation degree number according to the present invention (Examples 2 and 3) show correct formula appearance, enough limescale dissolution index and a higher lime soap cleaning efficacy in comparison to the comparative compositions (C3).

The values shown in Table 4 Show that pH values according to the invention (Example 3) have proper formula appearance, enough limescale dissolution index and outstanding lime soap cleaning efficacy in comparison to composition (C4) that presents also good appearance but a bad descaling power, below the required lime dissolution index, and bad lime soap cleaning.

Table 2.- Appearance, % Lime Soap Cleaning and Limescale Dissolution Index of the disinfecting bathroom cleaner compositions.

| Bathroom disinfectant composition | Appearance | % Lime Soap Cleaning (mean value) | Limescale Dissolution Index |
|---|---|---|---|
| C1 | Correct | 35 | >0.7 |
| C2 | Correct | 40 | >0.7 |
| E1 | Correct | 85 | >0.7 |
| E2 | Correct | 90 | >0.7 |

Table 3.- Appearance, % Lime Soap Cleaning and Limescale Dissolution Index of the disinfecting bathroom cleaner compositions.

| Bathroom disinfectant composition | Appearance | % Lime Soap Cleaning (mean value) | Limescale Dissolution Index |
|---|---|---|---|
| C3 | Correct | 30 | >0.7 |
| E2 | Correct | 75 | >0.7 |
| E3 | Correct | 80 | >0.7 |

Table 4.- Appearance, % Lime Soap Cleaning and Limescale Dissolution Index of the disinfecting bathroom cleaner compositions.

| Bathroom disinfectant composition | Appearance | % Lime Soap Cleaning (mean value) | Limescale Dissolution Index |
|---|---|---|---|
| C4 | Correct | 50 | <0.4 |
| E3 | Correct | 90 | >0.7 |

The limescale solubility of the cleaning compositions is always related to a standard toilet cleaner as recommended by IKW standard methodology, IKW Determination of the cleaner's ability to remove lime soaps from the SOFW Journal, 129.

**3. Disinfecting efficacy of the compositions according to the invention.**

The disinfectant efficacy of several compositions according to the invention was evaluated were evaluated according to the following methods:

- Bactericidal activity in Suspension against *Pseudomonas Aeruginosa* at 2% dilution (EN 1276:2020) at 3.00% dilution.
- Bactericidal activity on a Hard Surface against *Pseudomonas Aeruginosa* (EN 13697:2015) at 1.00% dilution.

Table 5 shows the bactericidal activities for the composition according to the invention (Example 3) in comparison to (C1 and C2). This demonstrates that the composition of according to the present invention (Example 3) has the required bactericidal activity by combining a component (a) (ether carboxylate) with Component (b) (cationic biocide). Additionally, the disinfectant activity of the cationic biocide is not affected in combination with the ether carboxylate surfactant, no inhibitory activity is observed in the present invention (Example 3) in comparison to the Comparative 2 (cationic biocide).

Table 5.- Log reduction results tested against Pseudomonas Aeruginosa according to EN 1276:2020 and EN 13697: 2015.

| Bathroom disinfectant composition | % Log reduction in Bactericidal activity in Suspension | % Log reduction in Bactericidal activity on a Hard Surface |
|---|---|---|
| C1 | 4.06 | 2.70 |
| C2 | >5.45 | >3.50 |
| E3 | >5.45 | >3.50 |

**Claims**

1. Aqueous cleaning composition comprising:

   (a) one or more alkyl ether carboxylic acids of Formula (I):

   $$R1\text{-}O\text{-}A\text{-}CH_2\text{-}COOH \qquad (I)$$

   or a salt thereof,
   wherein

   A represents a biradical consisting of n units $-(CH_2CH_2O)-$ and/or m units $(CH_2\text{-}CH(R2)O)$ or $-(CHR2CH_2O)-$;
   R1 is a linear or branched alkyl chain having from 1 to 8 carbon atoms or linear or branched alkenyl chain having from 2 to 8 carbon atoms, preferably linear or branched alkyl or alkenyl chain having from 4 to 8 carbon atoms, more preferably linear or branched alkyl or alkenyl chain having from 6 to 8 carbon atoms;
   R2 is a linear or branched alkyl chain having from 1 to 3 carbon atoms;
   n and m are independently an integer number from 0 to 15, and wherein the sum of n+m is from 1 to 15; preferably n and m are independently an integer number from 0 to 10, and wherein the sum of n+ m is from 1 to 10; more preferably n and m are independently an integer number from 0 to 8, and wherein the sum of n +m is from 3 to 8;
   and

   (b) a cationic biocide which is a quaternary ammonium compound;

   wherein the composition has a pH value less than t 4, preferably up to 3.5, more preferably up to 2.5; and wherein weight ratio between component (a) and component (b) is from 4:1 to 1:4, preferably from 2:1 to 1:2, more preferably from 1.5:1 to 1:1.5, even more preferably from 1.5:1 to 1:1.

2. Composition according to claim 1, **characterized in that** the ether carboxylic acid is a compound of formula (Ia):

   $$R1\text{-}O\text{-}(CH_2CH_2O\ n\text{-}CH_2COOH \qquad (Ia)$$

   or a salt thereof,
   wherein

   R1 is a linear or branched alkyl chain having from 1 to 8 carbon atoms, preferably from 4 to 8 carbon atoms, more preferably from 6 to 8 carbon atoms; and
   n is an integer for 1 to 15, preferably from 1 to 10, more preferably from 3 to 8.

3. Composition according to any one of the preceding claims, wherein the cationic biocide is a quaternary ammonium compound of formula (II):

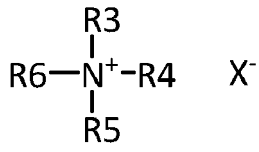

(II)

wherein R3, R4, R5 and R6 are the same or different, each independently being selected from the group consisting of a $C_1$-$C_{20}$ straight or branched alkyl chain, $C_3$-$C_{20}$ cycloalkyl optionally substituted with a straight or branched alkyl having from 1 to 6 carbon atoms, $C_6$-$C_{20}$ aryl optionally substituted with a straight or branched alkyl having from 1 to 6 carbon atoms; and
X- is an anionic counterion.

4. Composition according to any one of the preceding claims, **characterized in that** the cationic biocide is selected from the group consisting of di-($C_1$-$C_{10}$)alkyldimethyl quaternary ammonium, ($C_8$-$C_{18}$)alkyl benzyl quaternary ammonium, and mixtures thereof.

5. Composition according to any one of the preceding claims, **characterized in that** pH value between 1 and 3.5, preferably between 2 and 3.5, more preferably between 1 and 3, more preferably between 2 and 3, even more preferably 2.5.

6. Composition according to any one of the preceding claims, **characterized in that** the composition further comprises additional functional ingredients (c) selected from the groups consisting of surfactants, thickeners and/or viscosity modifiers, solvents, builders, pH adjusting agents, perfume, colouring agents, preservatives and combinations thereof.

7. Composition according to claim 6, **characterized in that** the pH adjusting agents are selected from weak acids.

8. Composition according to claim 7, **characterized in that** the weak acids are selected from the groups consisting of formic acid, lactic acid, citric acid, acetic acid, oxalic acid, malic acid, maleic acid, ascorbic acid and a mixture thereof; preferably selected from lactic, citric acid and a mixture thereof.

9. Composition according to any one of claims 6 to 8, wherein the composition comprises a builder, preferably sodium citrate, sodium lactate or mixtures thereof, more preferably sodium citrate.

10. Composition according to any one of claims 6 to 9, **characterized in that** solvent is selected from water-soluble solvents.

11. Use of the composition according to any one of claims 1 to 10 in household applications, preferably in bath and/or kitchen products, more preferably in bath products.

12. Use of the composition according to claims 1 to 10 for industrial applications, preferably in industrial acid disinfecting cleaners.

13. Use of composition according to claims 1 to 10 as cleaner and/or disinfectant for hard surfaces.

14. A process for producing the composition according to claims 1 to 10, comprising the steps of:

A) mixing components (a) and (b), and if present component (c), with water at room temperature;
B) stirring to obtain homogeneous and clear solution; and
C) adjusting the pH, if necessary, to a pH value less than 4; preferably up to 3.5; more preferably up to 2.5.

15. Method of hard surface cleaning comprising the steps of:

A) contacting hard surface with the cleaning composition according to claims 1 to 10;
B) allowing said composition to remain in contact with the applied surface at room temperature for a sufficient period of time so that the composition cleans and optionally disinfects the surface; and

C) rinsing said surface.

Europäisches Patentamt
European Patent Office
Office européen des brevets

# EUROPEAN SEARCH REPORT

Application Number
EP 22 38 2990

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/151552 A1 (ECOLAB USA INC [US]) 8 September 2017 (2017-09-08)<br>* figure 17; example 10 *<br>* example 11; tables 14A,15A *<br>* Marlowet 4539;<br>figure 15; example 9 *<br>* claims 1,6,8,11,26,29-32,35,38,48 *<br>* page 22, lines 4-10 *<br>* page 22, lines 14-22 *<br>* page 2, line 28 *<br>* page 9, last paragraph *<br>* page 45, paragraph 2 *<br>* page 45, last paragraph *<br>----- | 1-15 | INV.<br>A01N33/12<br>A01P1/00<br>C11D1/00 |

TECHNICAL FIELDS SEARCHED (IPC)

C11D
A01N
A01P

The present search report has been drawn up for all claims

1

| Place of search | Date of completion of the search | Examiner |
|---|---|---|
| Munich | 3 March 2023 | Marie, Gérald |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 38 2990

This annex lists the patent family members relating to the patent documents cited in the above-mentioned European search report. The members are as contained in the European Patent Office EDP file on
The European Patent Office is in no way liable for these particulars which are merely given for the purpose of information.

03-03-2023

| Patent document cited in search report | Publication date | Patent family member(s) | Publication date |
|---|---|---|---|
| WO 2017151552 A1 | 08-09-2017 | AU 2017227532 A1 | 23-08-2018 |
| | | CA 3016025 A1 | 08-09-2017 |
| | | CN 108882703 A | 23-11-2018 |
| | | EP 3422850 A1 | 09-01-2019 |
| | | JP 6904979 B2 | 21-07-2021 |
| | | JP 2019508498 A | 28-03-2019 |
| | | US 2017251663 A1 | 07-09-2017 |
| | | US 2022386598 A1 | 08-12-2022 |
| | | WO 2017151552 A1 | 08-09-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018031067 A
- EP 0652704 A
- WO 2007125101 A


### Non-patent literature cited in the description


- Polyether Carboxylates; Anionic Surfactants. **MEIJER ; SMID.** Surfactant Sciencie Series. vol. 56, 313-361
- The German Cosmetics, Toiletries, Perfumes and Detergents Association, Recommendations for the quality assessment of acidic toilet cleaners. *SOFW-Journal,* 2000, vol. 126, 50-56
- IKW Determination of the cleaner's ability to remove lime soaps. *SOFW Journal,* vol. 129
- The German Cosmetics, Toiletries, Perfumes and Detergents Association. *SOFW-Journal,* 2000, vol. 126, 50-56